# EUROPÄISCHE PATENTSCHRIFT

(11) **EP 3 365 199 B1**
(45) Veröffentlichungstag und Bekanntmachung des Hinweises auf die Patenterteilung: **19.02.2020**
(21) Anmeldenummer: 16775155.1
(22) Anmeldetag: 26.09.2016
(51) Int. Cl.: B60R 11/04

(54) **KAMERAMODUL**
CAMERA MODULE
MODULE DE CAMÉRA

(30) Priorität: 20.10.2015 DE 102015220445
(43) Veröffentlichungstag der Anmeldung: 29.08.2018
(73) Patentinhaber: Magna Mirrors Holding GmbH, 63877 Sailauf (DE)
(72) Erfinder: FUCHS, Paul, 97906 Faulbach (DE)
(74) Vertreter: Völger, Silke Beatrix
(86) Internationale Anmeldenummer: PCT/EP2016/072862
(87) Internationale Veröffentlichungsnummer: WO 2017/067750

(56) Entgegenhaltungen:
- EP-A1- 1 837 236
- DE-A1-102009 056 200
- DE-U1-202006 011 262
- DE-U1-202012 001 008

## Beschreibung

### Gebiet der Erfindung

Die Erfindung betrifft ein Kameramodul umfassend ein Kameragehäuse, eine im Kameragehäuse angeordnete Kamera mit einer Kameralinse, sowie einen Kameraträger, wobei der Kameraträger zur Befestigung mit dem Kameragehäuse und zur Befestigung an einem kraftfahrzeugseitigen Bauteil ausgebildet ist, sowie einen Außenspiegel umfassend ein solches Kameramodul.

### Stand der Technik

Üblicherweise sind Kameragehäuse zur Befestigung an Kraftfahrzeugen vorgesehen, wobei in den Kameragehäusen Kameras angeordnet sind. Solche Kameras dienen zur Kollisionsvermeidung, zur Sichtgebung oder zur Bildgebung. Ein derartiges Kameramodul ist aus der DE 10 2009 056 200 A1 bekannt.

Diese Kameras erfassen dabei Bilder außerhalb des Fahrzeugs. Dabei ist in der Regel ein Teil der Kamera, insbesondere die Kameralinse, in eine Öffnung eines kraftfahrzeugseitigen Bauteils eingesetzt. Eine solche Kameramontageöffnung weist dabei typischerweise einen Durchmesser auf, welcher so groß ausgebildet ist, dass ein entsprechend großer Spalt zur Kameralinse vorhanden ist, welcher zuverlässig eine Berührung zwischen kraftfahrzeugseitigen Bauteil und Kameralinse vermeidet, da die Kameralinse kann mit einer Platine verbunden sein. Würde eine Seiten- oder Querkraft auf die Kameralinse wirken, könnte sich die Kameralinse von der Platine lösen und die Funktion der Kamera wäre nicht mehr gewährleistet.

Aus der DE 20 2012 001 008 U1 ist ein Kameramodul zur Befestigung an einem kraftfahrzeugseitigen Bauteil gemäss dem Oberbegriff des Anspruchs 1 bekannt; die DE 20 2012 001 008 zeigt eine Fixierung einer Kamera in einem im Kraftfahrzeugteil gebildeten Karosserieteil bekannt, wobei die Fixierung ein Gehäuse umfasst in dem die Kamera fixiert gehalten ist. Hierfür ist die Kamera ohne Spiel in einer Hülse gehalten und die Hülse liegt mit ihren äußeren Seitenflächen auf den nach innen weisenden Seitenflächen des Gehäuses an.

Eine Befestigungsanordnung einer Rückblick-Kamera an einem Kraftfahrzeugteil ist aus der DE 20 2006 011 262 U1 bekannt.

### Zusammenfassung der Erfindung

Es ist eine Aufgabe der Erfindung ein Kameramodul für ein Kraftfahrzeug vorzusehen, welches einen Spalt zwischen einer Kameramontageöffnung und der Kameralinse minimiert und gleichzeitig einen Schutz der Kameralinse vor Seiten- oder Querkräften garantiert.

Die Lösung der Aufgabe erfolgt durch ein Kameramodul gemäß den Merkmalen des Anspruch 1.

Das Kameramodul umfasst ein Kameragehäuse, eine im Kameragehäuse angeordnete Kamera mit einer Kameralinse, sowie einen Kameraträger, wobei der Kameraträger zur Befestigung mit dem Kameragehäuse und zur Befestigung an einem kraftfahrzeugseitigen Bauteil ausgebildet ist, wobei der Kameraträger eine Positionierhülse aufweist, wobei die Kameralinse zumindest teilweise in der Positionierhülse angeordnet ist.

Ein Spalt zwischen der Positionierhülse und dem kraftfahrzeugseitigen Bauteil kann so gewählt sein, dass auch bei einem möglichen Kontakt, aufgrund möglicher Relativbewegung zwischen dem kraftfahrzeugseitigen Bauteil und dem Kameramodul, insbesondere zwischen dem kraftfahrzeugseitigen Bauteil und der Positionierhülse, keine Beschädigung an der Kamera auftreten kann, da die Positionierhülse die Kräfte zuverlässig aufnehmen und ableiten kann.

Der Kameraträger ist bevorzugt im Spritzgussverfahren hergestellt, wodurch die Form des Kameraträgers in einfacher Weise an die Geometrie des kraftfahrzeugseitigen Bauteils angepasst werden kann. Das hat den Vorteil, dass bei der Herstellung des kraftfahrzeugseitgien Bauteils keine spezielle Anpassung an das Kameramodul erfolgen muss. Auch die Oberfläche der Positionierhülse kann spezielle Strukturen aufweisen, die je nach Bedarf jener des kraftfahrzeugseitigen Bauteils angepasst sein oder, wenn gewünscht, von dieser abweichen können.

Weiterbildungen der Erfindung sind in den abhängigen Ansprüchen, der Beschreibung sowie den beigefügten Zeichnungen angegeben.

In einer bevorzugten Ausführungsform ist die Kameralinse vollständig in der Positionierhülse angeordnet.

Die Positionierhülse des Kameraträgers ist bevorzugt zumindest teilweise in eine Kameramontageöffnung des kraftfahrzeugseitigen Bauteils einsetzbar.

Die Positionierhülse kann auch Designfunktionen übernehmen, da ein Teil der Positionierhülse im Sichtbereich angeordnet sein kann. Daher kann der im Sichtbereich befindliche Teil der Positionierhülse eine qualitativ höhere Oberfläche aufweisen, beispielsweise kann dieser sichtbare Bereich verchromt werden. Dieser Bereich kann jedoch, wenn er nicht auffällig ausgebildet sein soll, die Farbe des kraftfahrzeugseitigen Bauteils aufweisen.

Die Positionierhülse weist in einer bevorzugten Ausführungsform im Wesentlichen die Form eines Hohlzylinders auf.

Die Höhe und der Durchmesse der Positionierhülse ist der Kamera, insbesondere der Kameralinse, angepasst. Um Verunreinigungen oder Schmutzablagerungen zu vermeiden ist der Spalt zwischen der Positionierhülse und der Kameralinse kleinstmöglich ausgebildet.

Die Positionierhülse ist bevorzugt einstückig mit dem Kameraträger ausgebildet. Das hat den technischen Vorteil, dass keine Bauteiltoleranzen zwischen Positionierhülse und Kameraträger ausgeglichen werden müssen.

In einer bevorzugten Ausführungsform weist der Kameraträger zumindest einen ersten Befestigungsabschnitt und zumindest einen zweiten Befestigungsabschnitt auf.

Der erste Befestigungsabschnitt ist zur Verbindung mit dem Kameragehäuse ausgebildet und weist in einer bevorzugten Ausführungsform einen Schraubdom auf. Das Kameragehäuse weist eine entsprechende Montagelasche auf, welche eine Durchgangsbohrung aufweist, durch welche eine Verschraubung mit dem Schraubdom des ersten Verbindungsabschnitts erfolgen kann.

Der zweite Befestigungsabschnitt ist zur Verbindung mit dem kraftfahrzeugseitigen Bauteil ausgebildet. Der zweite Befestigungsabschnitt des Kameraträgers weist dabei eine Montagelasche auf, welche zur Verbindung mit einem am kraftfahrzeugseitigen Bauteil angeordneten Schraubdom ausgebildet ist. Die Montagelasche weist ebenfalls eine Durchgangsbohrung, durch welche eine Verschraubung mit dem Schraubdom des kraftfahrzeugseitigen Bauteils erfolgen kann.

Der zumindest eine erste Befestigungsabschnitt ist bevorzugt an einem Kameragehäuse des Kameramoduls in einer ersten Montagerichtung befestigt. Der zweite Befestigungsabschnitt ist zur Befestigung mit einem kraftfahrzeugseitigen Bauteil vorgesehen, wobei der zweite Befestigungsabschnitt zur Befestigung in einer von der ersten Montagerichtung verschiedenen zweiten Montagerichtung ausgebildet ist. Durch die erfindungsgemäße Ausgestaltung des Kameraträgers mit ersten und zweiten Befestigungsabschnitten in unterschiedlichen Richtungen kann die Montagerichtung einer Kamera bzw. eines Kameragehäuses am Kameraträger von der Richtung der Montage des Kameraträgers am Kraftfahrzeug entkoppelt werden.

Vorzugsweise entspricht der Kameraträger der Geometrie des kraftfahrzeugseitigen Bauteils. Der Kameraträger kann, da er bevorzugt im Spritzgussverfahren hergestellt ist, auf einfache Weise der Geometrie des kraftfahrzeugseitige Bauteils angepasst werden, wodurch das kraftfahrzeugseitige Bauteil in einer fast beliebigen Form ausgebildet werden kann, was oft aus Styling-Gründen gewünscht ist.

Das kraftfahrzeugseitige Bauteil ist in einer bevorzugten Ausführungsform ein Außenspiegel.

Insbesondere ist das kraftfahrzeugseitige Bauteil eine Gehäuseblende des Außenspiegels. Das Kameramodul ist dabei in der Gehäuseblende des Außenspiegels befestigt, lediglich die Kameralinse des Kameramoduls ist durch die Kameramontageöffnung in der Gehäuseblende sichtbar.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer im Stand der Technik bekannten Befestigung eines Kameramoduls an einem kraftfahrzeugseitigen Bauteil.
- Fig. 2: ist eine Schnittansicht eines erfindungsgemäßen Kameramoduls.

### Detaillierte Beschreibung der Erfindung

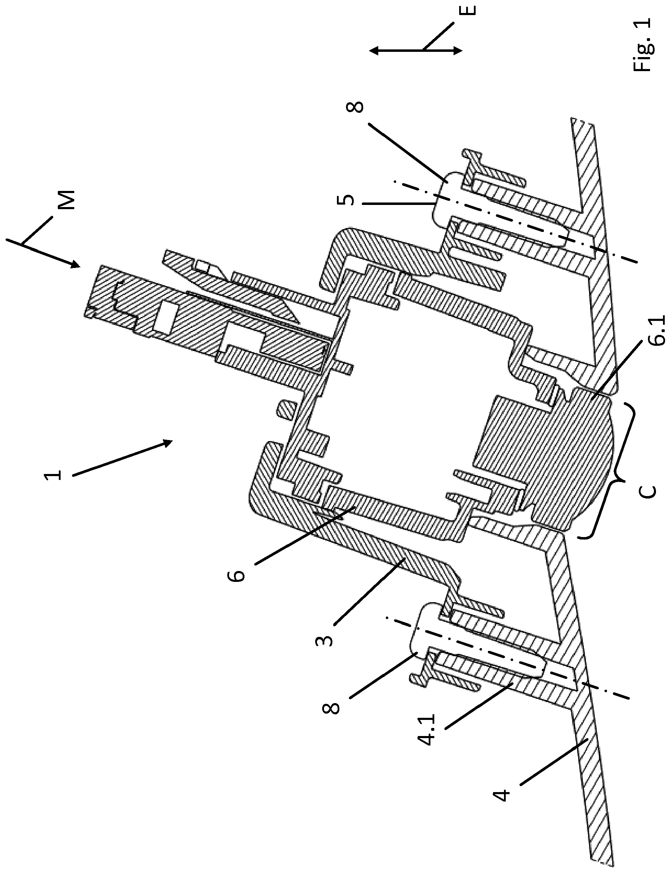

Fig. 1 zeigt eine Kamerabefestigung wie sie im Stand der Technik bekannt ist. Dargestellt ist ein Kameramodul 1 mit einem Kameragehäuse 3 und einer Kamera 6, wobei das Kameragehäuse 3 an einem kraftfahrzeugseitigen Bauteil 4 befestigt ist.

Die Kamera 6 ist hierbei in eine Kameramontageöffnung C im kraftfahrzeugseitigen Bauteil 4 eingesetzt. Wie es aus der Zeichnung zu erkennen ist, weist die Kameramontageöffnung C einen relativ großen Spalt auf, um zu verhindern, dass das kraftfahrzeugseitige Bauteil 4 die Kameralinse 6.1 berühren kann. Die Befestigung des Kameramoduls 1 an dem kraftfahrzeugseitigen Bauteil 4 erfolgt über eine Schraubverbindung. Hierzu sind an dem kraftfahrzeugseitigen Bauteil 4 erste Schraubdome 4.1 angespritzt, die ein Innengewinde aufweisen. Die Schraubdome 4.1 erstrecken sich dabei in Montagerichtung des Kameramoduls an dem kraftfahrzeug-seitigen Bauteil 4. Die Montagerichtung ist durch den Pfeil M angezeigt. Das Kameragehäuse 3 weist entsprechende Befestigungslaschen 6.2 auf, in die Durchgangsbohrungen eingebracht sind. Bei der Montage des Kameramoduls 1 wird das Kameramodul an dem kraftfahrzeugseitigen Bau-teil 4 im Bereich der Kameramontageöffnung angeordnet und ausgerichtet und über Befestigungsschrauben 8 über die Befestigungslaschen an den Schraubdomen 4.1 verschraubt.

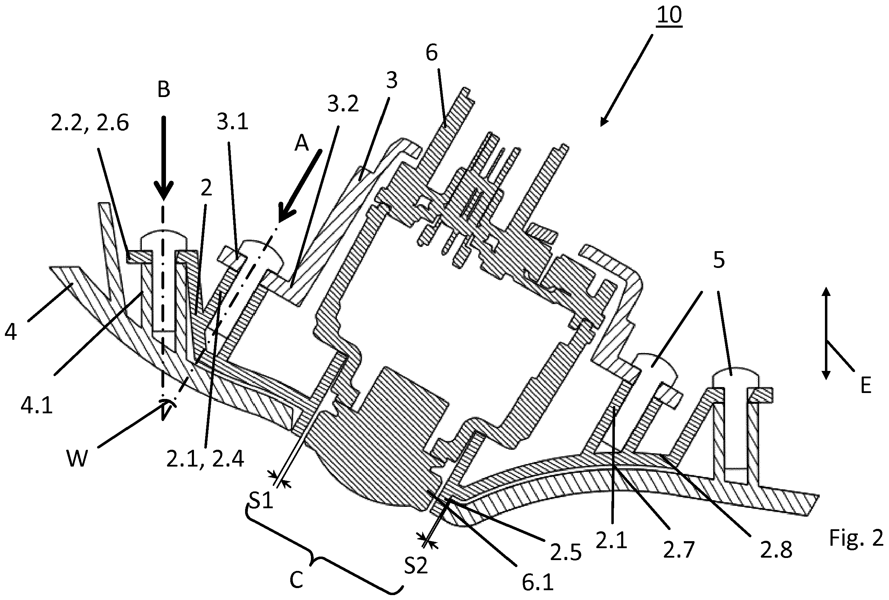

In Fig. 2 ist ein erfindungsgemäßes Kameramodul 10 dargestellt. Darge-stellt ist ein Kameramodul 10 mit einem Kameragehäuse 3, einem Kameraträger 2 und einer Kamera 6, wobei der Kameraträger 2 an einem kraft-fahrzeugseitigen Bauteil 4 befestigt ist. Das kraftfahrzeugseitige Bauteil 4 ist aus einem Kunststoffmaterial, vorzugsweise einem thermoplastischen Kunststoff in einem Spritzgießverfahren hergestellt.
Die Kamera 6 ist in einer Positionierhülse 2.5 des Kameraträgers eingesetzt und wird mit der Positionierhülse 2.5 in eine Kameramontageöffnung C im kraftfahrzeugseitigen Bauteil 4 eingesetzt. Die Befestigung des Kameramoduls 1 an dem kraftfahrzeugseitigen Bauteil 4 erfolgt über eine Schraubverbindung zwischen Kameraträger 2 und kraftfahrzeugseitigem Bauteil 4. Hierzu sind an dem kraftfahrzeugseitigen Bauteil 4 erste Schraubdome 4.1 angespritzt, die ein Innengewinde aufweisen. Die Schraubdome 4.1 erstrecken sich dabei in einer Montagerichtung B an dem kraftfahrzeugseitigen Bauteil 4. Die Montagrichtung B entspricht im Wesentlichen der Hauptentformungsrichtung des kraftfahrzeugseitigen Bauteils 4. Der Kameraträger 2 weist eine dem kraftfahrzeugseitigen Bauteil 4 zugewandte Seite 2.7 und eine gegenüberliegende Seite 2.8 auf, wobei die zu-gewandte Seite 2.7 bzw. Oberfläche der Oberfläche bzw. der Geometrie des kraftfahrzeugseitigen Bauteils 4 angepasst ausgeführt ist. Der Kameraträger ist ebenfalls aus einem Kunststoffmaterial, vorzugsweise einem thermoplastischen Kunststoffmaterial in einem Spritzgießverfahren hergestellt. In etwa mittig ist in den Kameraträger 2 eine Durchgangsöffnung eingebracht, wobei an der Durchgangsöffnung eine zylindrische Positionierhülse 2.5 angeformt ist. Der Kameraträger 2 weist eine Anzahl erster Befestigungsabschnitte 2.1 auf. Wie es aus der Schnittdarstellung der Figur 2 zu erkennen ist, sind an den Befestigungsabschnitten zweite Schraubdome 2.4 angespritzt, die mit einem Innengewinde ausgeführt sind. Die Anzahl der Befestigungsabschnitte mit zweiten Schraubdomen 2.4 hängt von der Geometrie des kraftfahrzeugseitigen Bauteils 4 ab. Die zweiten Schraubdome 2.4 sind hinsichtlich ihrer Längserstreckung in Richtung einer ersten Montagerichtung A ausgebildet. Die Montagerichtung A entspricht im Wesentlichen der Richtung der Montage einer Kamera bzw. eines Kameragehäuses am Kameraträger bzw. der Richtung der Mittelachse der Kamera 6 (Mittelachse M). Das Kameragehäuse 3 ist über Schraubverbindungen an den zweiten Schraubdomen 2.4 verbunden. Hierfür sind an einem unteren Endbereich 3.2 nach außen kragende Mon-tagelaschen 3.1 angeformt. In die Montagelaschen 3.1 sind Durchgangs-bohrungen eingebracht, wobei die Durchgangsbohrungen einen Durch-messer aufweisen, welcher einen Toleranzausgleich erlaubt und so eine genaue Positionierung des Kameragehäuses 3 im Kameraträger 2 ermöglicht. Da die Kamera 6 mit Kameralinse 6.1 in dem Kameragehäuse 3 gehalten ist, ist hierdurch insbesondere eine Positionierung der Kamera-Iinse 6.1 in der Positionierhülse 2.5 möglich. Die Positionierhülse 2.5 des Kameraträgers 2 ragt in die Kameramontageöffnung C was den Vorteil bietet, dass der Spalt S1 zwischen Kameralinse 6.1 und Positionierhülse 2.5 bzw. der Spalt S2 zwischen kraftfahrzeugseitigen Bauteil 4 und Positionierhülse 2.5 minimiert werden kann, da die Positionierhülse 2.5 verhindert, dass Seiten- oder Querkräfte auf die Kameralinse 6.1 wirken können. Der Kameraträger 2 weist zweite Befestigungsabschnitte 2.2 auf, welche in Form von Montagelaschen 2.6 ausgebildet sind. Die Montagelaschen 2.6 sind randseitig an dem Kameraträger nach außen kragend angeformt und erstrecken sich senkrecht zu der zweiten Montagerichtung B. Die zweite Montagerichtung B verläuft in einem Winkel W zu der ersten Montagerichtung A. Die Montagelaschen 2.6 weisen jeweils eine Durchgangsbohrung auf, wobei die Durchgangsbohrungen einen Durchmesser aufweisen, welcher einen Toleranzausgleich zwischen Kameraträger 2 und kraftfahrzeug-seitigem Bauteil 4 erlaubt und so eine genaue Positionierung des Kameramoduls 10 im kraftfahrzeugseitigen Bauteil 4 ermöglicht wird. Das Kameramodul 10 ist über die Montagelaschen 2.6 des Kameraträgers 2 mit den Schraubdomen 4.1 des kraftfahrzeugseitigen Bauteils 4 verschraubt.

### Bezugszeichenliste

- 1: Kameramodul
- 2: Kameraträger
- 2.1: erster Befestigungsabschnitt
- 2.2: zweiter Befestigungsabschnitt
- 2.4: zweiter Schraubdom
- 2.5: Positionierhülse
- 2.6: Montagelasche
- 3: Kameragehäuse
- 3.1: Montagelasche
- 4: kraftfahrzeugseitiges Bauteil
- 4.1: erster Schraubdom
- 6: Kamera
- 6.1: Kameralinse

- A: erste Montagerichtung
- B: zweite Montagerichtung
- C: Kameramontageöffnung

## Patentansprüche

1. Kameramodul (10) zur Befestigung an einem kraftfahrzeugseitigen Bauteil (4), welches eine Kameramontageöffnung (C) aufweist, umfassend ein Kameragehäuse (3), eine im Kameragehäuse (3) angeordnete Kamera (6) mit einer Kameralinse (6.1), sowie einen Kameraträger (2), wobei der Kameraträger (2) zur Befestigung mit dem Kameragehäuse (3) und zur Befestigung an einem kraftfahrzeugseitigen Bauteil (4) ausgebildet ist und wobei ,der Kameraträger (2) eine Positionierhülse (2.5) aufweist, wobei die Kameralinse (6.1) vollständig in der Positionierhülse (2.5) angeordnet ist, **dadurch gekennzeichnet, dass** die Positionierhülse in die Kameramontageöffnung (C) ragt, und dass Positionierhülse (2.5) und Kameralinse (6.1) derart angeordnet sind, dass ein Spalt (S1) zwischen Kameralinse (6.1) und Positionierhülse (2.5) bzw. ein Spalt (S2) zwischen kraftfahrzeugseitigem Bauteil (4) und Positionierhülse (2.5) minimiert ist, wobei die Positionierhülse (2.5) verhindert, dass Seiten- oder Querkräfte auf die Kameralinse (6.1) wirken können.

2. Kameramodul (10) nach zumindest einem der vorhergehenden Ansprüche, **dadurch gekennzeichnet, dass** die Positionierhülse (2.5) als hohlzylindrische Hülse ausgebildet ist.

3. Kameramodul (10) nach zumindest einem der vorhergehenden Ansprüche, **dadurch gekennzeichnet, dass** der Kameraträger (2) zumindest einen ersten Befestigungsabschnitt (2.1) und zumindest einen zweiten Befestigungsabschnitt (2.2) aufweist.

4. Kameramodul (10) nach zumindest einem der vorhergehenden Ansprüche, **dadurch gekennzeichnet, dass** der zumindest eine erste Befestigungsabschnitt (2.1) an einer Montagelasche (3.1) des Kameragehäuses in einer ersten Montagerichtung (A) befestigt ist, und dass der zweite Befestigungsabschnitt (2.2) zur Befestigung mit dem kraftfahrzeugseitigen Bauteil (4) vorgesehen ist, wobei der zweite Befestigungsabschnitt (2.2) zur Befestigung in einer von der ersten Montagerichtung (A) verschiedenen zweiten Montagerichtung (B) ausgebildet ist.

5. Kameramodul (1) nach zumindest einem der vorhergehenden Ansprüche, **dadurch gekennzeichnet, dass** der Kameraträger (2) im Wesentlichen der Geometrie des kraftfahrzeugseitigen Bauteils (4) entspricht.

6. Kameramodul (1) nach zumindest einem der vorhergehenden Ansprüche, **dadurch gekennzeichnet, dass** das kraftfahrzeugseitige Bauteil (4) ein Teil des Außenspiegels ist.

7. Kameramodul (1) nach Anspruch 7, **dadurch gekennzeichnet, dass** das kraftfahrzeugseitige Bauteil (4) eine Gehäuseblende des Außenspiegels ist.

8. Außenspiegel umfassend ein Kameramodul (10) nach zumindest einem der vorhergehenden Ansprüche, **dadurch gekennzeichnet, dass** die Positionierhülse (2.5) des Kameraträgers (2) in eine Kameramontageöffnung (C) eines Teiles des Außenspiegels eingesetzt ist, insbesondere in eine Gehäuseblende des Außenspiegels.

## Claims

1. Camera module (10) for fastening to a motor-vehicle component (4) that has a camera mounting opening (C), comprising a camera housing (3), a camera (6), arranged in the camera housing (3), with a camera lens (6.1), and a camera carrier (2), wherein the camera carrier (2) is configured for fastening to the camera housing (3) and for fastening to a motor-vehicle component (4) and wherein the camera carrier (2) has a positioning sleeve (2.5), wherein the camera lens (6.1) is arranged entirely in the positioning sleeve (2.5), **characterized in that** the positioning sleeve projects into the camera mounting opening (C), and **in that** the positioning sleeve (2.5) and camera lens (6.1) are arranged such that a gap (S1) between the camera lens (6.1) and positioning sleeve (2.5) and a gap (S2) between the motor-vehicle component (4) and positioning sleeve (2.5) are respectively minimized, wherein the positioning sleeve (2.5) prevents lateral or transverse forces from being able to act on the camera lens (6.1).

2. Camera module (10) according to at least one of the preceding claims, **characterized in that** the positioning sleeve (2.5) is in the form of a hollow-cylindrical sleeve.

3. Camera module (10) according to at least one of the preceding claims, **characterized in that** the camera carrier (2) has at least one first fastening portion (2.1) and at least one second fastening portion (2.2).

4. Camera module (10) according to at least one of the preceding claims, **characterized in that** the at least one first fastening portion (2.1) is fastened to a mounting lug (3.1) of the camera housing in a first mounting direction (A), and **in that** the second fastening portion (2.2) is intended for fastening to the motor-vehicle component (4), wherein the second fastening portion (2.2) is configured for fastening in a second mounting direction (B) different from the first mounting direction (A).

5. Camera module (1) according to at least one of the preceding claims, **characterized in that** the camera carrier (2) corresponds substantially to the geometry of the motor-vehicle component (4).

6. Camera module (1) according to at least one of the preceding claims, **characterized in that** the motor-vehicle component (4) is a part of the exterior mirror.

7. Camera module (1) according to Claim 7, **characterized in that** the motor-vehicle component (4) is a housing cover of the exterior mirror.

8. Exterior mirror comprising a camera module (10) according to at least one of the preceding claims, **characterized in that** the positioning sleeve (2.5) of the camera carrier (2) has been inserted into a camera mounting opening (C) of a part of the exterior mirror, in particular into a housing cover of the exterior mirror.

## Revendications

1. Module de caméra (10) destiné à être fixé à un composant (4), côté véhicule automobile, qui comporte une ouverture de montage de caméra (C), ledit module de caméra comprenant un boîtier de caméra (3), une caméra (6) disposée dans le boîtier de caméra (3) et pourvue d'un objectif de caméra (6.1), et un support de caméra (2), le support de caméra (2) étant conçu pour être fixé au boîtier de caméra (3) et pour être fixé à un composant (4) côté véhicule automobile et le support de caméra (2) comportant un manchon de positionnement (2.5),
l'objectif de caméra (6.1) étant entièrement disposé dans le manchon de positionnement (2.5), **caractérisé en ce que** le manchon de positionnement fait saillie dans l'ouverture de montage de caméra (C), et **en ce que** le manchon de positionnement (2.5) et l'objectif de caméra (6.1) sont disposés de manière à minimiser un espace (S1) ménagé entre l'objectif de caméra (6.1) et le manchon de positionnement (2.5) ou un espace (S2) ménagé entre le composant (4) côté véhicule automobile et le manchon de positionnement (2.5), le manchon de positionnement (2.5) empêchant des forces latérales ou transversales d'agir sur l'objectif de caméra (6.1).

2. Module de caméra (10) selon l'une au moins des revendications précédentes, **caractérisé en ce que** le manchon de positionnement (2.5) est réalisé sous la forme d'un manchon cylindrique creux.

3. Module de caméra (10) selon l'une au moins des revendications précédentes, **caractérisé en ce que** le support de caméra (2) comporte au moins une première portion de fixation (2.1) et au moins une deuxième portion de fixation (2.2).

4. Module de caméra (10) selon l'une au moins des revendications précédentes, **caractérisé en ce que** l'au moins une première portion de fixation (2.1) est fixée à une attache de montage (3.1) du boîtier de caméra dans une première direction de montage (A), et **en ce que** la deuxième portion de fixation (2.2) est prévue pour fixer le composant (4) côté véhicule automobile, la deuxième portion de fixation (2.2) étant conçue pour être fixée dans une deuxième direction de montage (B) différente de la première direction de montage (A).

5. Module de caméra (1) selon l'une au moins des revendications précédentes, **caractérisé en ce que** le support de caméra (2) correspond sensiblement à la géométrie du composant (4) côté véhicule automobile.

6. Module caméra (1) selon l'une au moins des revendications précédentes, **caractérisé en ce que** le composant (4) côté véhicule automobile fait partie du rétroviseur extérieur.

7. Module caméra (1) selon la revendication 7, **caractérisé en ce que** le composant (4) côté véhicule automobile est un obturateur de boîtier du rétroviseur extérieur.

8. Rétroviseur extérieur comprenant un module de caméra (10) selon l'une au moins des revendications précédentes, **caractérisé en ce que** le manchon de positionnement (2.5) du support de caméra (2) est inséré dans une ouverture de montage de caméra (C) d'une partie du rétroviseur extérieur, notamment dans un obturateur de boîtier du rétroviseur extérieur.
